# FASCICULE DE BREVET EUROPEEN

(11) **EP 0 430 762 B1**
(45) Date de publication et mention de la délivrance du brevet: **08.01.1997**
(21) Numéro de dépôt: 90403272.9
(22) Date de dépôt: 20.11.1990
(51) Int. Cl.: B29C 65/34, F16L 47/02, G05D 23/275, B29L 31/24

(54) **Procédé et dispositif pour détecter une condition de chauffage d'une pièce en matière plastique et pièce de raccordement pour le soudage d'éléments également en matière plastique**
Verfahren und Vorrichtung zum Ermitteln des Erwärmungszustandes eines Teiles aus thermoplastischem Material und Verbindungsstück zum Verschweissen von Kunststoffteilen
Process and apparatus for detecting the heat condition of a plastic element and element for joining plastic parts

(30) Priorité: 29.11.1989 FR 8915707
(43) Date de publication de la demande: 05.06.1991
(73) Titulaire: GAZ DE FRANCE (SERVICE NATIONAL), F-75017 Paris (FR)
(72) Inventeur: Dufour, Denis, F-95170 Deuil La Barre (FR); Fortin, François, F-75002 Paris (FR)
(74) Mandataire: Lerner, François

(56) Documents cités:
- EP-A- 0 115 623
- EP-A- 0 216 576
- EP-A- 0 290 016
- EP-A- 0 301 864
- WO-A-83/01138
- GB-A- 2 174 955
- US-A- 2 797 296
- US-A- 2 945 115
- US-A- 4 560 971
- PATENT ABSTRACTS OF JAPAN vol. 3, no. 80 (M-065) 11 Juillet 1979 & JP-A-54 057 241 (MORI MIKIO) 8 Mai 1979
- DATABASE WPI Derwent Publications Ltd., London, GB; AN 80-08595C (05) & JP-A-50 026 081 (SUMITOMO ELEC IND KK) 18 Mars 1975

## Description

La présente invention concerne l'assemblage de pièces constituées au moins partiellement en matériau thermofusible.

Actuellement, de tels assemblages sont essentiellement réalisés par thermosoudage. Et cette technique est largement employée notamment dans l'industrie gazière pour l'établissement de jonctions entre tubes dans les réseaux de distribution, (en particulier tubes en polyéthylène de densité supérieure à 925 kg/m³ environ) .

Selon un procédé aujourd'hui très répandu, les pièces à réunir, en général des tubes, sont assemblées au moyen d'une pièce de raccordement.

Quelle que soit la nature de cette pièce (manchon, prise de branchement...), celle-ci comporte de façon habituelle, noyée dans son épaisseur, une résistance électrique de chauffage consistant généralement en un fil électriquement conducteur bobiné disposé à proximité de la surface de la pièce qui doit venir en vis-à-vis de celle du (des) tube(s).

L'opération de soudage est réalisée en plaçant en vis à vis la partie des pièces à souder et en raccordant le fil électrique bobiné à une source électrique (telle qu'une source de courant alternatif redressé) qui, par effet joule, va échauffer la résistance et provoquer le ramollissement jusqu'à fusion de la matière plastique environnante des pièces, réalisant ainsi le soudage.

Pour que ce soudage soit de bonne qualité, c'est-à-dire pour obtenir une jonction étanche aux fluides gazeux et une résistance mécanique satisfaisante, le temps de chauffage doit être compris entre une durée minimale permettant d'obtenir après refroidissement un soudage correct entre les pièces, et une durée maximale inférieure à celle susceptible de provoquer une dégradation thermique des pièces.

Un problème important que l'on rencontre aujourd'hui concerne la répartition de la zone de chauffage et la possibilité de contrôler ce chauffage pour l'interrompre juste au moment opportun, lorsque par exemple les conditions pour un bon soudage sont réunies.

Or les moyens et les techniques utilisées actuellement pour détecter ce moment "idéal" s'avèrent dans certains cas peu efficaces.

Il existe déjà un procédé pour interrompre l'alimentation électrique d'une résistance réalisée à partir d'un fil unique enrobé d'une couche de matière électriquement isolante et disposé au sein d'une matière plastique constitutive d'une pièce, dans lequel :
- on détecte les variations de tension et/ou d'intensité consécutives à ces courts-circuits, et on interrompt alors l'alimentation en courant de la résistance.

Un tel procédé est notamment décrit dans GB-A-2 174 955. Mais, le problème de l'invention n'est pas simplement d'interrompre l'alimentation électrique en cas de court-circuit. C'est pourquoi le procédé de l'invention pour détecter une condition de chauffage optimale se caractérise en ce que:
- ledit fil résistant enrobé présentant des points de croisement où des brins du fil se chevauchent, on choisit la température de fusion de la matière constituant sa couche isolante d'enrobage pour qu'elle soit comprise entre une température minimum supérieure à la température de fusion de la matière plastique de la pièce et une température maximum inférieure à la température de dégradation thermique de cette même pièce,
- on alimente électriquement ladite résistance jusqu'à chauffer à sa température de fusion la couche isolante qui l'enrobe et à provoquer des courts-circuits à certains au moins des points de croisement du fil résistant,
- et on procède comme décrit précédemment lorsque les courts-circuits se produisent.

De cette façon, on va pouvoir assurer un chauffage plus uniforme des pièces puisque la surface d'échange thermique sera plus importante que dans le cas du fil bobiné. En outre tant que la couche d'isolation du fil résistant n'est fondue, on évite tout risque de court-circuit sur la résistance. Et lors de la fusion de cette couche, on tire alors avantage de l'apparition des premiers courts-circuits pour arrêter le chauffage avant que les pièces soient thermiquement dégradées.

Il est à noter que GB-A-2 174 955 ne décrit pas une telle solution. Le court-circuit étant considéré comme un évènement indésirable, la détection de la condition de chauffage optimale est réalisée par un moyen distinct portant sur le système d'alimentation.

Outre ce procédé, l'invention concerne également une pièce de raccordement pour éléments en matière plastique thermofusible et présentant une surface pour sa liaison avec une surface correspondante de ces mêmes éléments, ladite pièce comprenant une résistance électrique réalisée à partir d'un fil unique enrobé d'une couche de matière électriquement isolante et disposé à proximité de ladite surface de liaison pour provoquer la fusion de la matière qui l'entoure et induire le soudage entre ladite pièce et les éléments, cette pièce étant caractérisée en ce que le fil résistant enrobé présente des points de croisement et la température de fusion de la matière constituant sa couche isolante d'enrobage est telle qu'elle est comprise entre une température minimum supérieure à la température de fusion de la matière plastique de la pièce et une température maximum inférieure à la température de dégradation thermique de cette même pièce.

Et l'invention concerne encore un dispositif utilisable pour interrompre l'alimentation électrique d'une résistance réalisée à partir d'un fil unique enrobé par une couche de matière électrique isolante et disposé au sein d'une matière plastique constitutive d'une pièce, comportant des moyens de détection pour détecter des courts-circuits sur ledit fil résistant sensiblement à la température de fusion de sa couche isolante d'enrobage, et des moyens d'arrêt pour interrompre l'alimentation électrique de ce fil résistant lorsque lesdits moyens de détection ont détecté de tels courts-circuits, caractérisé en ce que pour détecter une condition de chauffage optimal le fil résistant enrobé présente des points de croisement et la température de fusion de la matière constituant sa couche isolante d'enrobage est comprise entre une température minimum supérieure à la température de fusion de la matière plastique de ladite pièce et une température maximum inférieure à la température de dégradation thermique de cette même pièce, ledit dispositif comprenant en outre des moyens d'alimentation en énergie électrique du fil enrobé résistant pour chauffer ce dernier jusqu'à la température de fusion de sa couche isolante d'enrobage.

D'autres explications, caractéristiques et avantages de l'invention apparaîtront encore de la. description qui va suivre faite en référence aux dessins d'accompagnement donnés uniquement à titre d'exemples non limitatifs et dans lesquels :
- la figure 1 est une vue générale en coupe transversale médiane d'un système de raccordement utilisant un manchon pour la liaison bout à bout de deux tubes, ce manchon étant équipé d'un filet maillé conducteur formant résistance de chauffage conformément à l'invention,
- la figure 2 est une vue en légère perspective du filet conducteur qui en l'espèce se présente sous la forme d'une chaussette tricotée ou d'une sorte de "cotte de mailles" conformée en cylindre pour une application au système de raccordement de la figure 1,
- la figure 3 illustre en vue agrandie et en coupe longitudinale le détail repéré III sur la figure 2,
- la figure 4 représente, également en vue agrandie, le détail repéré IV sur la figure 2,
- la figure 5 est une vue schématique d'une autre conformation possible du fil résistant de la figure 1,
- la figure 6 présente l'évolution,en fonction du temps,du courant circulant dans la résistance de la pièce de la figure 1,
- et la figure 7 est une illustration en coupe transversale médiane d'un autre système de raccordement utilisant en l'espèce une prise de branchement pour un raccordement transversal sur un tube.

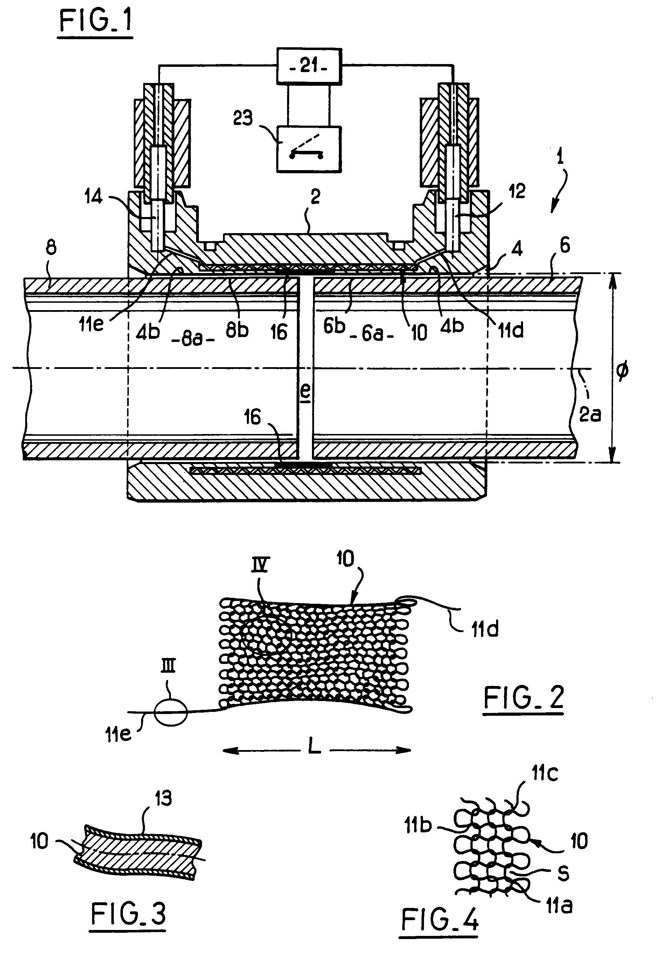

Si l'on se reporte tout d'abord à la figure 1, on voit donc illustré un raccord électrosoudable repéré dans son ensemble 1 et comprenant un manchon de raccordement 2 pourvu d'un corps en matière plastique thermofusible dans l'orifice central 4 duquel viennent s'engager les extrémités respectivement 6a et 8a de deux tubes 6, 8 cylindriques à section sensiblement circulaire réalisés, comme le corps du manchon, en matière plastique thermofusible.

Les tubes 6 et 8 sont disposés coaxialement, sensiblement dans l'axe 2a de l'orifice du manchon et présentent un diamètre extérieur légèrement inférieur au diamètre ⌀ de l'orifice 4, de sorte que le manchon et les tubes présentent des surfaces correspondantes en vis-à-vis 4b ; 6b, 8b par lesquelles ils vont pouvoir être mutuellement réunis au cours du soudage.

Parmi les matières plastiques utilisables pour réaliser le corps du manchon et les tubes à réunir, on peut notamment citer le polyéthylène, le polyamide, le polybutylène et le polypropylène.

Pour la réunion des tubes, le manchon 2 comporte une résistance électrique de chauffage 10 reliée par deux bornes de connexion 12, 14 amovibles à une source d'énergie électrique 15 telle qu'une source de courant alternatif redressé propre à assurer une élévation suffisante de la température de la résistance pour induire le soudage des pièces entre-elles, ceci avec une jonction sensiblement étanche au gaz et avec une résistance mécanique compatible avec l'utilisation de ces pièces.

Conformément à l'invention, la résistance 10 est constituée à partir d'un fil électrique conducteur unique présentant des points de croisement tels que repérés 11a, 11b, 11c sur la figure 4, où des portions de ce fil se chevauchent. Pour éviter les court-circuits néfastes à l'obtention dans de bonnes conditions d'une température de chauffage optimale, le fil 10 est recouvert d'une couche électriquement isolante 13 (voir figure 3). Conformément à l'invention, cette couche 13 présente une température de fusion comprise entre une température minimum supérieure à la température de fusion de la matière plastique constituant le corps fusible de la pièce 2 (et des tubes à réunir) et une température maximum inférieure à la température de dégradation thermique de ces mêmes pièces. De façon classique, on comprendra par "température de dégradation" la température de craquage ou de rupture des chaînes constituant la structure même de ces pièces.

Une dégradation thermique de pièces en matière plastique se remarque par des dégagements de fumées et/ou par la formation de cavités dans les pièces consécutivement à un excès de fusion et à une rupture irréversible des chaînes moléculaires. On constate également parfois des projections de matière en fusion, voire des fuites en fin de soudure, à l'endroit des zones de soudage endommagées.

En suivant le procédé de l'invention on évitera de tels problèmes puisque la couche isolante va fondre avant que la température des pièces atteigne cette température de dégradation. Dès que cette couche va entrer en fusion, il va se créer au moins en quelques points de croisement de la résistance des court-circuits par contact direct entre des brins alors dénudés du fil.

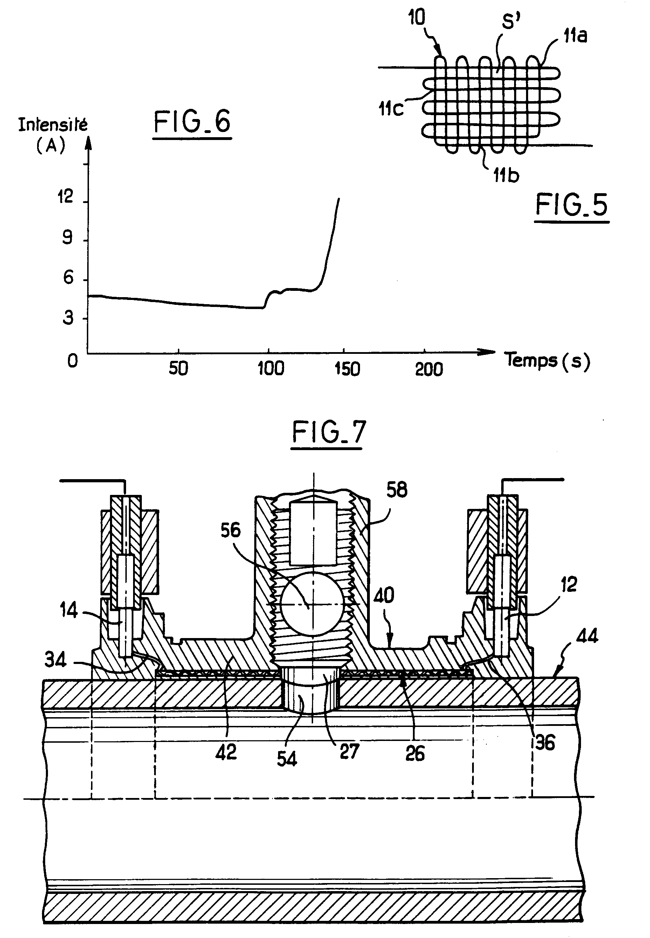

Hors de la pièce, ce fil étant relié à des moyens 21 de mesure de courant ou de tension, on va pouvoir immédiatement détecter ces premiers court-circuits, lesquels se manifestent par des sauts de courant comme illustré sur la figure 6 (on aurait pu également mettre en évidence des sauts de tension).

Dans l'exemple de cette figure 6 les premiers court-circuits apparaissent entre 100 et 120 s après le début de l'alimentation en courant de la résistance à tension constante d'environ 64 V. C'est à ce moment, entre 100 et 120 s, que l'on va donc détecter ces variations et commander en conséquence l'interruption du courant en ouvrant le circuit en 23 (figure 1).

Dans la pratique il est apparu adapté de choisir la nature et l'épaisseur de la gaine isolante 13 pour qu'elle conserve ses qualités d'isolement électrique jusque vers 300 à 350° C, ce qui correspond à sa température de fusion, laissant ainsi une certaine marge avant que les pièces (en l'espèce en polyéthylène) risquent d'être thermiquement endommagées.

Comme on le peut le constater en particulier au vu de la figure 1 la résistance 10 ainsi constituée sera disposée ou noyée à proximité immédiate de la surface 4b de l'orifice 4 du manchon, voire directement au niveau de cette surface afin que la zone de chauffage des pièces soit située au plus près des tubes à réunir.

Sur la figure 1, on remarquera également que l'élément résistif 10 est équipé localement, à proximité de sa face intérieure dirigée vers les tubes, d'un moyen de protection tel qu'une fine barrette 16 s'étendant en regard de l'espace e qui sépare les extrémités en regard des deux tubes.

Cette barrette 16 a pour rôle de créer "une zone froide" en regard des extrémités précitées des tubes en vis-à-vis afin d'éviter qu'au cours du chauffage la matière en fusion puisse s'écouler dans l'espace libre e, risquant d'obstruer au moins partiellement les tubes.

Pour qu'elle assure cette fonction, la barrette 16 pourra s'étendre donc en surface sur toute la périphérie intérieure de la résistance et sera réalisée en une matière, par exemple en métal, ayant une température de fusion supérieure à celle de la matière plastique environnante des tubes, du manchon, voire même de la résistance.

D'une façon générale, cette barrette sera de préférence électriquement conductrice et son épaisseur sera comprise entre environ 0,3 et 0,5 mm.

Sur la figure 2, on a illustré une première forme de réalisation tout à fait appropriée d'une résistance 10 utilisable sur la pièce de la figure 1.

En l'espèce, cette résistance présente un aspect comparable à celui d'une portion de cotte de mailles à fil unique tissé, de forme générale sensiblement cylindrique à section plus ou moins circulaire et comprenant une succession de boucles en forme "d'Ω" (oméga) imbriquées les unes dans les autres, à la fois pour assurer une cohésion mécanique et pour réaliser les points de recouvrement ou d'intersection 11a, 11b.. du fil.

A titre d'exemple, un tel filet pourra être constitué à partir d'un fil de cuivre d'un diamètre de l'ordre de 0,3 à 0,5 mm, recouvert d'un isolant à base de polyesterimide d'une épaisseur de l'ordre de quelques centaines de microns. Le fil pourra être entrelacé pour constituer des mailles (voir notamment figure 4) d'une surface S comprise entre environ 4 et 80 à 100mm², avec une résistance électrique comprise entre 1 et 10 Ω environ.

Une fois réalisé, le filet tubulaire pourra présenter un diamètre de l'ordre de 65 mm pour une longueur L (voir figure 2) de l'ordre de 160 mm.

Avec une résistance de filet d'environ 2,7 Ω, on a pu obtenir des résultats satisfaisants en alimentant la résistance avec une tension de soudage constante de 32 volts appliquée pendant 280 secondes.

Au plan de la réalisation, on notera que l'utilisation d'un tel filet fabriqué à partir d'un fil unique présente l'avantage de permettre la connexion électrique de ce filet aux bornes 12 et 14 du manchon (ou de toute autre pièce de raccordement, telle qu'une prise de branchement ; voir figure 7) par simple prolongation au-delà du volume du filet des deux extrémités opposées 11d, 11e (figure 2) du fil, ces extrémités pouvant être ensuite connectées de façon tout à fait habituelle directement aux bornes 12 et 14, sans nécessité d'adjonction de conducteurs supplémentaires. Un tel exemple de réalisation a été clairement figuré sur la figure 1.

Mais d'autres modes de réalisation de la résistance 10 pourraient être envisagés.

Sur la figure 5 on a d'ailleurs illustré un exemple où la résistance présente une série de méandres, l'essentiel étant que l'on trouve des points de croisement où les brins du fil se chevauchent, réalisant des zones potentielles de court-circuits à la température de fusion de la couche d'enrobage de la résistance.

Par ailleurs, sur la figure 7, on a illustré une pièce de raccordement différente du manchon illustré sur la figure 1 mais en soi tout à fait connue puisque cette pièce est du type connue sous l'appellation "prise de branchement" utilisée dans la technique gazière pour le raccordement transversal de deux tubes.

Cette prise de branchement repérée dans son ensemble 40 se présente localement sous la forme d'une selle 42 propre à venir recouvrir localement un tube 44.

Comme le manchon de la figure 1, la prise 40 est équipée des bornes de connexion amovibles 12 et 14.

En l'espèce la résistance de chauffage utilisée est constituée comme celle de la figure 1 mais avec une forme sensiblement hémicylindrique.

Comme dans le cas du manchon la résistance repérée ici 26 est avantageusement noyée dans l'épaisseur de la prise de branchement de manière qu'il y ait continuité de matière.

Avant soudage entre la prise 40 et le tube 44, la résistance présentait une surface sensiblement uniforme, sans découpe.

Par contre, comme on peut le constater au vu de la figure 7, après soudage et refroidissement des pièces, cette même résistance est alors traversée par un orifice 27 ménagé coaxialement à l'orifice 54 du tube 44 par lequel celui-ci communique avec le passage intérieur 56 du fût 58 de la prise de branchement et , via ce canal, 56 avec l'autre tube auquel le premier 44 doit être relié par branchement d'un second tube (non représenté) sur l'extrémité libre du fût 58.

## Revendications

1. Procédé pour interrompre l'alimentation électrique d'une résistance réalisée à partir d'un fil unique (10) enrobé d'une couche (13) de matière électriquement isolante et disposé au sein d'une matière plastique constitutive d'une pièce, dans lequel :
a) en cas de courts-circuits,on détecte les variations de tension et/ou d'intensité,
b) et on interrompt alors l'alimentation en courant de la résistance,
caractérisé en ce que pour détecter, en outre, une condition de chauffage optimale :
c) ledit fil résistant enrobé présentant des points de croisement (11a, 11b) où des brins du fil se chevauchent, on choisit la température de fusion de la matière constituant sa couche isolante d'enrobage (13) pour qu'elle soit comprise entre une température minimum supérieure à la température de fusion de la matière plastique de la pièce et une température maximum inférieure à la température de dégradation thermique de cette même pièce,
d) on alimente électriquement ladite résistance jusqu'à chauffer à sa température de fusion la couche isolante qui l'enrobe et à provoquer lesdits courts-circuits à certains au moins des points de croisement du fil résistant,
e) et lorsque les courts-circuits se produisent, on procède suivant les étapes a) et b).

2. Pièce de raccordement pour éléments en matière plastique thermofusible, du type constituée au moins partiellement en matériau thermofusible compatible avec la matière plastique desdits éléments et présentant une surface (4b) pour sa liaison avec une surface correspondante (6b, 8b) de ces mêmes éléments (6, 8), ladite pièce (2, 40) comprenant une résistance électrique (10) réalisée à partir d'un fil unique enrobé d'une couche (13) de matière électriquement isolante et disposé à proximité de ladite surface de liaison pour provoquer la fusion de la matière qui l'entoure et induire le soudage entre ladite pièce et les éléments, caractérisée en ce que le fil résistant enrobé (10) présente des points de croisement (11a, 11b) où des brins du fil se chevauchent et la température de fusion de la matière constituant sa couche isolante d'enrobage (13) est telle qu'elle est comprise entre une température minimum supérieure à la température de fusion de la matière plastique de la pièce et une température maximum inférieure à la température de dégradation thermique de cette même pièce.

3. Pièce de raccordement selon la revendication 2 caractérisé en ce que le fil enrobé résistant (10) se présente sous la forme d'une cotte de mailles comprenant une série de boucles entrelacées.

4. Pièce de raccordement selon la revendication 2 ou la revendication 3 caractérisée en ce que ladite couche (13) de matière électriquement isolante conserve ses qualités d'isolation électrique jusqu'à environ 300 à 350°C.

5. Pièce de raccordement selon l'une quelconque des revendications 2 à 4 du type comportant deux bornes (12, 14) de connexion électrique, caractérisée en ce que, dans l'épaisseur de la pièce (2), la liaison électrique auxdites bornes (12, 14) d'une partie dénudée du fil enrobé conducteur (10) s'effectue par les deux brins (11d, 11e) d'extrémité opposée de ce fil.

6. Pièce de raccordement selon l'une quelconque des revendications 3 à 5 caractérisée en ce que ladite cotte maillée est constituée à partir d'un fil de cuivre d'environ 0,3 à 0,5 mm de diamètre, de résistance comprise entre environ 1 et 10 et recouvert par une couche électriquement isolante à base de polyesterimide.

7. Pièce de raccordement selon l'une quelconque des revendications 3 à 6 caractérisée en ce que la surface (S, S') des mailles du filet conducteur est comprise entre environ 4 et 80 à 100 mm².

8. Dispositif pour interrompre l'alimentation électrique d'une résistance (10) réalisée à partir d'un fil unique enrobé par une couche (13) de matière électrique isolante et disposé au sein d'une matière plastique constitutive d'une pièce (2, 40), comportant des moyens (21) de détection pour détecter des courts-circuits sur ledit fil résistant sensiblement à la température de fusion de sa couche isolante d'enrobage, et des moyens (23) d'arrêt pour interrompre l'alimentation électrique de ce fil résistant lorsque lesdits moyens de détection (21) ont détecté de tels courts-circuits, caractérisé en ce que, pour détecter une condition de chauffage optimal, le fil résistant enrobé (10) présente des points de croisement (11a, 11b, ...) et la température de fusion de la matière constituant sa couche isolante d'enrobage (13) est comprise entre une température minimum supérieure à la température de fusion de la matière plastique de ladite pièce (2, 40) et une température maximum inférieure à la température de dégradation thermique de cette même pièce, ledit dispositif comprenant en outre des moyens (15) d'alimentation en énergie électrique du fil enrobé résistant pour chauffer volontairement ce dernier jusqu'à la température de fusion de sa couche isolante d'enrobage (13).

## Claims

1. Process for interrupting the electric supply of a resistor produced from a single wire (10) coated with a layer (13) of electrically insulating material and arranged within a plastics material which is a component of a part, in which:
a) in the event of short-circuits, the variations in voltage and/or current intensity are detected,
b) and the current supply of the resistor is interrupted,
characterised in that to detect, in addition, an optimum heating condition:
c) said coated resistant wire having crossover points (11a, 11b) where the strands of the wire overlapping the melting temperature of the material forming the insulating coating layer (13) thereof is selected such that it is between a minimum temperature which is greater than the melting temperature of the plastics material of the part and a maximum temperature which is less than the thermal decomposition temperature of this same part;
d) said resistor is supplied with electricity until the insulating layer which coats it is brought to its melting temperature, and to bring about short-circuits at at least some of the crossover points of the resistant wire,
e) and, when the short-circuits are produced, stages a) and b) are performed.

2. Connection part for thermoplastic plastics material elements, of the type consisting, at least partially, of thermoplastic material which is compatible with the plastics material of said elements and having a surface (4b) for the connection thereof with a corresponding surface (6b, 8b) of these same elements (6, 8), said part (2, 40) comprising an electrical resistor (10) formed of a single wire coated with a layer (13) of electrically insulating material and arranged in the vicinity of said connection surface to cause the melting of the material which surrounds it and induces the welding between said part and the elements, characterised in that the coated resistant wire (10) has crossover points (11a, 11b) where the strands of the wire overlap, and the melting temperature of the material forming the coating insulating layer thereof (13) is such that it is between a minimum temperature which is greater than the melting temperature of the plastics material of the part and a maximum temperature which is less than the thermal breakdown temperature of this same part.

3. Connection part according to Claim 2, characterised in that the resistant coated wire (10) is in the form of a mesh comprising a series of interconnected loops.

4. Connection part according to Claim 2 or Claim 3, characterised in that said layer (13) of electrically insulated material retains its electrical insulation properties up to approximately 300 to 350°C.

5. Connection part according to any one of Claims 2 to 4 of the type comprising two electrical connection terminals (12, 14), characterised in that, in the thickness of the part (2), the electrical connection to said terminals (12, 14) of one stripped part of the coated conducting wire (10) is performed by the two strands (11d, 11e) of the opposite end of this wire.

6. Connection part according to any one of Claims 3 to 5, characterized in that said mesh is formed of a copper wire of approximately 0.3 to 0.5 mm in diameter, of a resistance of between 1 and 10 and covered by a polyesterimide based electrically insulating layer.

7. Connection part according to any one of Claims 3 to 6, characterized in that the surface (S, S') of the mesh of the conductive net is between 4 and 80 to 100 mm².

8. Device for interrupting the electrical supply of a resistor (10) produced from a single wire coated with a layer (13) of electrically insulating material and arranged within a plastics material forming a part (2, 40) comprising detecting means (21) for detecting short-circuits on said resistant wire substantially at the melting temperature of the insulating coating layer thereof, and stopping means (23) for interrupting the electrical supply of this resisting wire when said detection means (21) have detected short-circuits of this type, characterized in that, to detect an optimum heating condition, the coated resistant wire (10) has crossover points (11a, 11b...) and the melting temperature of the material forming the coating insulating layer (13) is between a minimum temperature which is greater than the melting temperature of the plastics material of said part. (2, 40) and a maximum temperature which is less than the thermal decomposition temperature of this said part, said device comprising, furthermore, means (15) for supplying the coated resistant wire with electric power to heat it, intentionally, to the temperature at which its insulating coating layer (13) melts.

## Patentansprüche

1. Verfahren zur Unterbrechung der Stromversorgung eines von einem einzelnen Draht (10), der von einer Schicht (13) eines elektrisch isolierenden Materials umhüllt ist und innerhalb eines von Kunststoffmaterial gebildeten Werkstückes angeordnet ist, gebildeten Widerstandes, bei dem man
a) im Falle von Kurzschlüssen die Veränderungen der Spannung und/oder der Stromstärke ermittelt,
b) und dann die Stromzufuhr des Widerstandes unterbricht,
**dadurch gekennzeichnet**, daß man zur Ermittlung zusätzlich einer optimalen Erwärmungsbedingung,
c) wobei der umhüllte Widerstandsdraht Kreuzungspunkte (11a, 11b) oder sich überschneidende Drahtlitzen hat, die Schmelztemperatur des seine Umhüllungsisolierschicht (13) bildenden Materials so auswählt, daß sie zwischen einer Mindesttemperatur oberhalb der Schmelztemperatur des Kunststoffmaterials des Werkstückes und einer Maximaltemperatur unterhalb der Temperatur des thermischen Abbaues dieses Werkstückes liegt,
d) den besagten Widerstand bis zur Erwärmung auf seine Schmelztemperatur der ihn umhüllenden Isolierschicht und bis zum Hervorrufen der Kurzschlüsse an wenigstens bestimmten der Kreuzungspunkte des Widerstandsdrahtes mit Strom versorgt,
e) und, wenn die Kurzschlüsse eintreten, nach den Stufen (a) und (b) arbeitet.

2. Verbindungsstück für Teile aus hitzeschmelzbarem Kunststoffmaterial, das wenigstens teilweise aus mit dem Kunststoffmaterial dieser Teile verträglichen hitzeschmelzbaren Material besteht und eine Oberfläche (4b) für seine Verbindung mit einer entsprechenden Oberfläche (6b, 8b) dieser Teile (6, 8) besitzt, wobei dieses Verbindungsstück (2, 40) einen elektrischen Widerstand (10) umfaßt, der von einem einzigen Draht gebildet wird, der von einer Schicht (13) eines elektrisch isolierenden Materials umhüllt ist und nahe bei der Verbindungsoberfläche angeordnet ist, um das Schmelzen des ihn umgebenden Materials hervorzurufen und das Verschweißen zwischen dem Verbindungsstück und den Teilen einzuleiten, **dadurch gekennzeichnet**, daß der umhüllte Widerstandsdraht (10) Kreuzungspunkte (11a, 11b) oder sich überschneidende Drahtlitzen hat und die Schmelztemperatur des seine Isolierschichtumhüllung (13) bildenden Materials derart ist, daß sie zwischen einer Mindesttemperatur oberhalb der Schmelztemperatur des Kunststoffmaterials des Verbindungsstückes und einer Maximaltemperatur unterhalb der Temperatur des thermischen Abbaues dieses Verbindungsstückes liegt.

3. Verbindungsstück nach Anspruch 2, **dadurch gekennzeichnet**, daß der umhüllte Widerstandsdraht (10) in der Form eines Kettenhemdes vorliegt, das eine Reihe verschlungener Schlaufen umfaßt.

4. Verbindungsstück nach Anspruch 2 oder Anspruch 3, **dadurch gekennzeichnet**, daß daß die Schicht (13) von elektrisch isolierendem Material ihre elektrischen Isoliereigenschaffen bis zu ungefähr 300 bis 350 °C bewahrt.

5. Verbindungsstück nach einem der Ansprüche 1 bis 4 mit zwei elektrischen Verbindungsanschlüssen (12, 14), **dadurch gekennzeichnet**, daß in der Dicke des Verbindungsstückes (2) die elektrische Verbindung eines freigelegten Teiles des umhüllten Leiterdrahtes (10) zu den Anschlüssen (12, 14) durch die beiden Litzen (11d, 11e) des gegenüberliegenden Randes des Drahtes erfolgt.

6. Verbindungsstück nach einem der Ansprüche 3 bis 5, **dadurch gekennzeichnet**, daß das Kettenhemd von einem Kupferdraht mit einem Durchmesser von etwa 0,3 bis 0,5 mm, mit einem Widerstand zwischen etwa 1 und 10 Ω und mit einer Umhüllung durch eine elektrisch isolierende Schicht auf Polyesterimidbasis gebildet wird.

7. Verbindungsstück nach einem der Ansprüche 3 bis 6, **dadurch gekennzeichnet**, daß die Oberfläche (S, S') der Leiternetzmaschen zwischen etwa 4 und 80 je 100 mm² liegt.

8. Vorrichtung zur Unterbrechung der Stromversorgung eines Widerstandes (10), der von einem einzigen Draht gebildet wird, welcher von einer Schicht (13) aus elektrisch isolierendem Material umhüllt ist und innerhalb eines Werkstückes (2, 40) aus einem Kunststoffmaterial angeordnet ist, mit Einrichtungen (21) zum Ermitteln von Kurzschlüssen auf dem Widerstandsdraht im wesentlichen bei der Schmelztemperatur der Umhüllungsisolierschicht und Anhalteeinrichtungen (23) zum Unterbrechen der Stromversorgung des Widerstandsdrahtes, wenn die Ermittlungseinrichtungen (21) solche Kurzschlüsse ermittelt haben, **dadurch gekennzeichnet**, daß zur Ermittlung eines optimalen Erwärmungszustandes der umhüllte Widerstandsdraht (10) Kreuzungspunkte (11a, 11b, ...) aufweist und die Schmelztemperatur des seine Isolierschichtumhüllung (13) bildenden Materials zwischen einer Mindesttemperatur oberhalb der Schmelztemperatur des Kunststoffmaterials des Werkstückes (2, 40) und einer Maximaltemperatur unterhalb der Temperatur des thermischen Abbaues dieses Werkstückes liegt, wobei die Vorrichtung zusätzlich Einrichtungen (15) zur Versorgung des umhüllten Widerstandsdrahtes mit elektrischer Energie umfaßt, um letzteren absichtlich bis zu der Schmelztemperatur der Isolierschichtumhüllung (13) zu erwärmen.
